# EUROPEAN PATENT APPLICATION

(11) **EP 1 724 590 A1**
(43) Date of publication of application: **22.11.2006**
(21) Application number: 05010774.7
(22) Date of filing: 18.05.2005
(51) Int. Cl.: G01N 35/10

(54) **Fluid storage and injection mechanism for simultaneous analyzer**

(71) Applicant: Tera Autotech Corporation, Tachia, Taichung Hsien (TW)
(72) Inventor: Lee, Yi-Lung, Shalu Township Taichung County (TW)
(74) Representative: Becker Kurig Straus

(57) **Abstract**

A fluid storage and injection mechanism (100) for use in a simultaneous analyzer includes a rotary table (10), a driving unit for rotating the rotary table, and a plurality of storage and injection units (20) fastened to and equiangularly spaced around the periphery of the rotary table (10). Each storage and injection unit has a storage tank (22) having storage chamber (221) for containing a fluid, and an actuating member (23) mounted in the storage tank and movable forwardly and backwardly in the storage chamber (221) for forcing the contained fluid out of the storage tank (22) upon movement of the respective storage and injection unit with the rotary table to a predetermined position.

## Description

### BACKGROUND OF THE INVENTION

### 1. Field of the Invention

The present invention relates generally to a simultaneous analyzer and more specifically, to a fluid storage and injection mechanism for simultaneous analyzer.

### 2. Description of the Related Art

Conventionally, mixing different fluids to form a desired finished product is achieved manually by taking each prepared fluid from the respective storage tank to a mixing tank and then vibrating the mixing tank to mix the added fluids into the desired mixture. Transferring different fluids from different storage tanks to a mixing tank by labor takes much time. A simultaneous analyzer is known comprising a plurality of storage tanks for holding different fluids, and a movable syringe for picking up the contained fluid from each selected storage tank and injecting the received fluid into a mixing tank. After each injection operation, a cleaning fluid is guided into the movable syringe, and then the movable syringe is moved to a collector tank and operated to discharge the cleaning fluid into the collector tank. After this cleaning cycle, the movable syringe is moved to a next storage tank for picking up another fluid. This fluid transferring and syringe cleaning procedure is complicated, wasting much time.

### SUMMARY OF THE INVENTION

The present invention has been accomplished under the circumstances in view. It is one object of the present invention to provide a fluid storage and injection mechanism for simultaneous analyzer, which improves fluid mixing efficiency before analysis.

It is another object of the present invention to provide a fluid storage and injection mechanism for simultaneous analyzer, which has a simple structure and is practical in use.

To achieve these objects of the present invention, the fluid storage and injection mechanism comprises a rotary table assembly having a driving unit and a rotary table coupled to the driving unit and being rotatable by the driving unit; and a plurality of storage and injection units fastened to the rotary table and equiangularly spaced around the periphery of the rotary table. Each the storage and injection unit comprises a storage tank having a storage chamber for containing a fluid and an injection hole at a bottom side of the storage chamber, and an actuating member mounted in the storage chamber of the storage tank and movable forwardly and backwardly in the storage chamber for forcing the contained fluid out of the storage chamber through the injection hole upon movement of the respective storage and injection unit with the rotary table to a predetermined position.

### BRIEF DESCRIPTION OF THE DRAWINGS

FIG. 1 is a schematic top view of the preferred embodiment of the present invention.
FIG. 2 is a schematic side view of the preferred embodiment of the present invention.
FIG. 3 is a schematic drawing showing the preferred embodiment of the present invention in action.
FIG. 4 is another schematic drawing showing the preferred embodiment of the present invention in action.

### DETAILED DESCRIPTION OF THE INVENTION

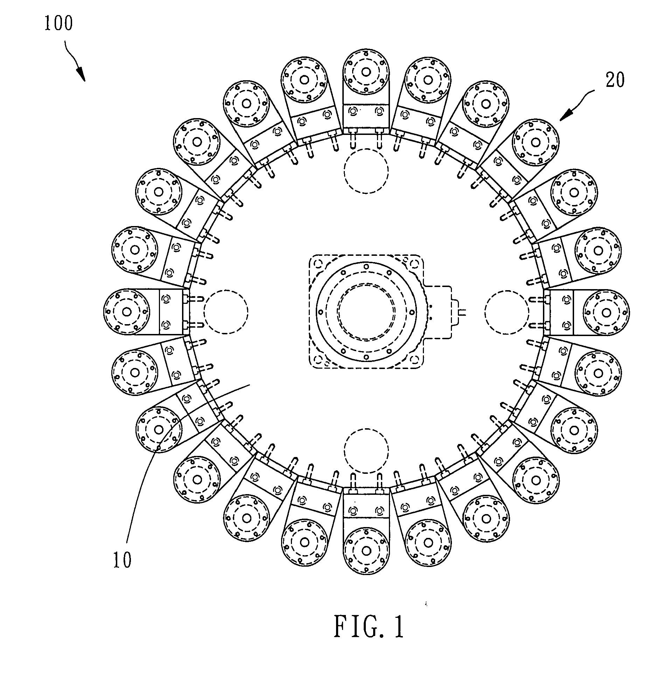

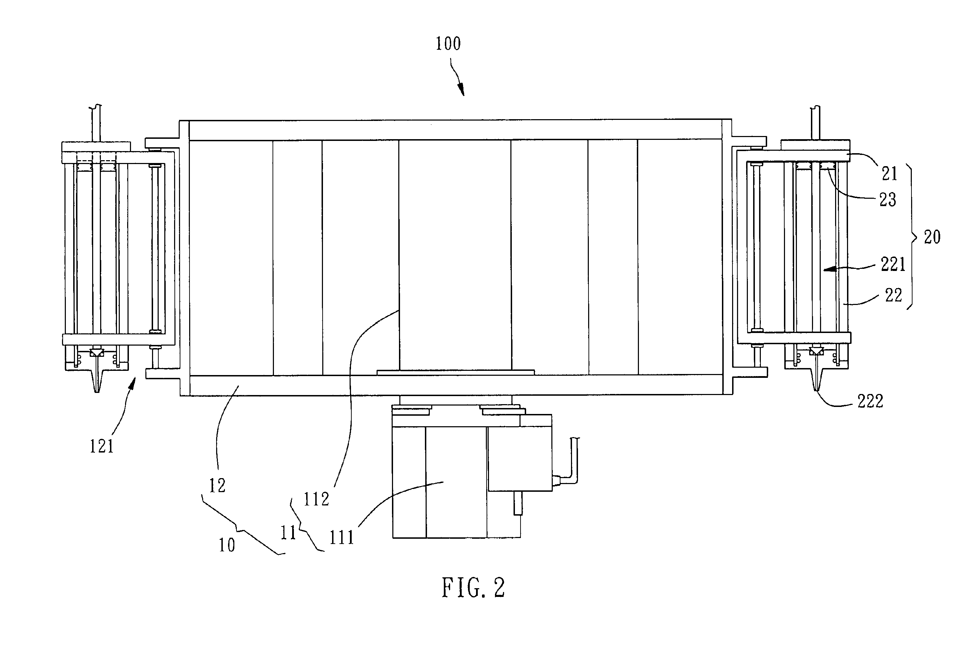

Referring to FIGS. 1 and 2, a fluid storage and injection mechanism **100** for simultaneous analyzer in accordance with the present invention is shown comprising a rotary table assembly **10,** and a plurality of storage and injection units **20.**

The rotary table assembly **10** comprises a driving unit **11** and a rotary table **12.** The driving unit **11** comprises a step motor **111,** and a shaft **112** rotatable by the motor **111.** The motor **111** is mounted on a platform or the like. The shaft **112** is fixedly connected to the motor **111** and adapted to rotate the rotary table **12.** The rotary table is a circular wheel coupled to the shaft **112** for synchronous rotation with the shaft **112,** having a plurality of holders **121** equiangularly spaced around the periphery.

Each storage and injection unit **20** is comprised of a connecting member **21,** a storage tank **22,** and an actuating member **23.** The connecting member **21** is a bracket fixedly fastened to one holder **121** of the rotary table **12.** The storage tank **22** is fastened to the connecting member **21** and suspending outside the rotary table **12,** defining a storage chamber **221** for holding a fluid and an injection hole **222** at the bottom side of the storage chamber **221.** The actuating member **23** is a piston mounted in the storage chamber **221** of the storage tank **22,** and movable forwardly and backwardly in the storage chamber **221.** The actuating member **23** is kept in close contact with the inside wall of the storage chamber **221** such that the storage fluid does not flow out of the injection hole **222** when the actuating member **23** does no work.

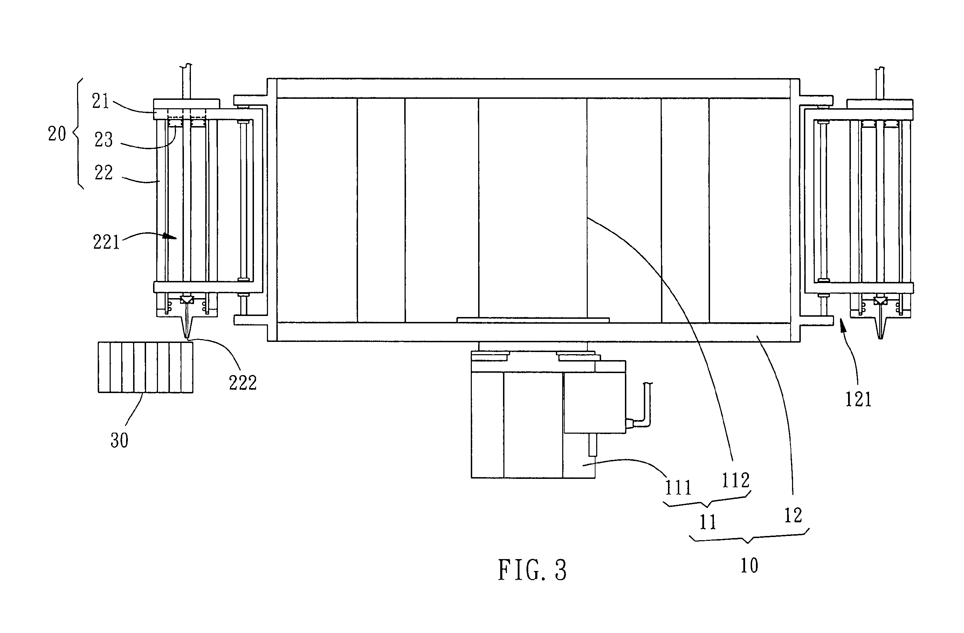

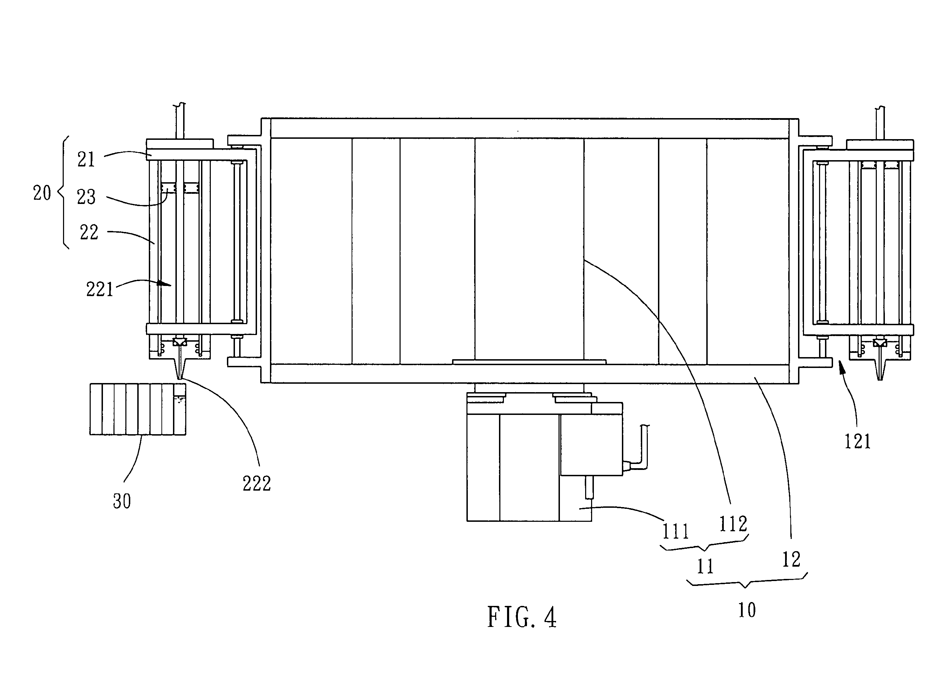

The operation of the present invention is simply and outlined hereinafter with reference to FIGS. 3 and 4. After injection of different desired fluids into the storage chambers **221** of the storage tanks **22** respectively, the fluids can be selectively injected into a mixing tank **30.** At this time, the mixing tank **30** is moved to a predetermined location near one side of the fluid storage and injection mechanism **100** below one storage and injection unit **20,** and then the driving unit **11** is started to rotate the rotary table **12** at a predetermined speed. When one storage and injection unit **20** reached the injection position right above the mixing tank **30,** the actuating member **23** of the respective storage and injection unit **20** is immediately moved downwards to force a certain amount of the respective fluid out of the respective storage chamber **221** through the respective injection hole **222** into the mixing tank **30,** and then the driving unit **11** turns the rotary table **12** through a predetermined angle to shift a second storage and injection unit **20** to the injection position right above the mixing tank **30,** and then the actuating member **23** of this second storage and injection unit **20** is lowered to force a predetermined amount of the respective fluid out of the respective storage chamber **221** through the respective injection hole **222** into the mixing tank **30.** This procedure is repeated again and again until all selected fluids have been injected into the mixing tank **30.** After all selected fluids have been injected into the mixing tank **30,** the mixing tank **30** is carried to a vibrating mixer and shaken by the vibrating mixer to mix the contained fluids.

As indicated above, the invention provides a storage and injection mechanism, which comprises a rotary table carrying a plurality of storage and injection units around the periphery, and a driving unit controllable to rotate the rotary table step by step for enabling the storage and injection units to be automatically shifted to a mixing tank one after another in a proper order so that storage fluids can be selectively and automatically discharged out of the storage and injection units into a mixing tank for further analysis.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A fluid storage and injection mechanism for use in a simultaneous analyzer, comprising:
a rotary table assembly having a driving unit and a rotary table coupled to said driving unit and being rotatable by said driving unit; and
a plurality of storage and injection units fastened to said rotary table and equiangularly spaced around a periphery of said rotary table, each said storage and injection unit comprising a storage tank having a storage chamber for containing a fluid and an injection hole at a bottom side of said storage chamber, and an actuating member mounted in said storage chamber of said storage tank and movable forwardly and backwardly in said storage chamber for forcing the contained fluid out of said storage chamber through said injection hole upon movement of the respective storage and injection unit with said rotary table to a predetermined position.

2. The fluid storage and injection mechanism as claimed in claim 1, wherein said driving unit comprises a motor mounted on a platform, and a shaft coupled between said motor and said rotary table for rotating said rotary table by said motor.

3. The fluid storage and injection mechanism as claimed in claim 1, wherein said rotary table is a circular wheel coupled to said driving unit for synchronous rotation with said driving unit; said rotary table has a plurality of holders equiangularly spaced around the periphery thereof for holding said storage and injection units respectively.

4. The fluid storage and injection mechanism as claimed in claim 1, wherein said storage and injection units each have a connecting member for connecting the respective storage tank to the periphery of said rotary table.

5. The fluid storage and injection mechanism as claimed in claim 4, wherein said connecting member is a bracket, having one side fixedly fastened to the periphery of said rotary table and an opposite side connected to the respective storage tank.

6. The fluid storage and injection mechanism as claimed in claim 1, wherein said actuating member is a piston peripherally stopped against an inside wall of the respective storage tank.
